(19) Europäisches Patentamt
European Patent Office
Office européen des brevets

(11) **EP 2 439 065 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
*B32B 17/10* *(2006.01)*      *E04B 1/94* *(2006.01)*
*C03C 27/12* *(2006.01)*

(21) Anmeldenummer: **11179998.7**

(22) Anmeldetag: **05.09.2011**

(54) **Verbundscheibe**

Composite glazing

Vitre composite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2010 DE 102010037988**

(43) Veröffentlichungstag der Anmeldung:
**11.04.2012 Patentblatt 2012/15**

(73) Patentinhaber: **Schott AG**
**55122 Mainz (DE)**

(72) Erfinder:
• **Panzner, Gerrit**
**07407 Rudolstadt (DE)**
• **Freitag, Rüdiger**
**36433 Etterwinden (DE)**

• **Fiedler, Hans-Joachim**
**98693 Ilmenau (DE)**
• **Wehmeier, Lutz, Dr.**
**07751 Jena (DE)**

(74) Vertreter: **Fleck, Hermann-Josef**
**Patentanwälte Jeck-Fleck-Herrmann**
**Klingengasse 2**
**71665 Vaihingen/Enz (DE)**

(56) Entgegenhaltungen:
| | |
|---|---|
| EP-A1- 0 389 291 | EP-A1- 2 090 427 |
| EP-A2- 1 088 651 | WO-A1-2004/082933 |
| WO-A1-2011/120680 | DE-A1- 4 244 048 |
| DE-A1- 19 539 214 | DE-A1-102006 035 262 |
| DE-A1-102008 043 718 | DE-T2- 3 486 336 |
| DE-U1- 9 211 909 | US-A- 4 243 719 |
| US-A1- 2003 157 339 | US-A1- 2010 104 877 |

**Beschreibung**

Die Erfindung betrifft eine Verbundscheibe, insbesondere eine monolithische, angriffhemmende und feuerwiderstandsfähige Verglasung.

Aus dem Stand der Technik sind verschiedene Schutzverglasungen bekannt. Beispielsweise zeigt die WO 2008/068744 A1 eine Verbundscheibe, die stark durchbruchhemmende Eigenschaften aufweist. Hierzu ist ein Glaspaket bestehend aus mehreren parallel zueinander angeordneten und miteinander verbundenen Glasscheiben verwendet. Hinter dieses Glaspaket ist eine massive Scheibe aus Polycarbonat gestellt. Über die Polycarbonat-Scheibe können hohe kinetische Energien abgefangen werden. Nachteilig bei diesen durchbruchhemmenden Verglasungen ist die mangelnde Brandschutzbeständigkeit.

Eine weitere Verbundscheibe ist aus der US 2009/0246426 A1 bekannt. Dabei wird eine Brandschutzverglasung dadurch erhalten, dass mehrere Kalknatronscheiben zueinander parallel beabstandet angeordnet sind. Die Zwischenräume zwischen den Kalknatronscheiben werden mit einer intumeszierenden Schicht ausgefüllt, die die Kalknatronscheiben miteinander verbinden. Zusätzlich werden Kunststofffolien zwischen den Kalknatronscheiben und der intumeszierenden Schicht positioniert. Die Kunststofffolien können beispielsweise UV-absorbierende Eigenschaften aufweisen. Der Aufbau dieser bekannten Verglasung ist komplex und nur sehr aufwändig zu fertigen.

Weiterhin sind aus dem Stand der Technik Brandschutzverglasungen bekannt, die beispielsweise nach EN 357 klassifiziert sind. Diese Brandschutzverglasungen sichern den Raumabschluss, wobei die Wärmeleitung erheblich eingedämmt wird. Brandschutzverglasungen haben den Nachteil, dass sie die erforderliche Durchbruchhemmung nach EN 356 bzw. nach ISO 16936 nicht aufweisen.

Insbesondere bieten diese Brandschutzgläser keinen zuverlässigen Schutz gegen punktförmigen Durchschlag im Sinne der ENV 1627/ENV 1630.

Die nachveröffentlichte WO 2011/120680 A1 offenbart eine Verbundscheibe bei der mehrere Glasscheiben miteinander kombiniert sind. Eine der Glasscheiben ist dabei als chemisch vorgespannte, sprödbrüchige Scheibe ausgebildet. Die einzelnen Scheiben sind über Folien, bestehend aus Polyvinylbutyral oder thermoplastischem Polyurethan miteinander verbunden.

Aus der EP 2 090 427 A1 geht eine Brandschutzverglasung als bekannt hervor, bei der zwei Glaspakete miteinander verbunden sind. Die Glaspakete bestehen dabei aus zueinander parallel beabstandeten Glasscheiben, zwischen denen eine im Brandfall aufschäumende Füllschicht gehalten ist. Die Glaspakete sind mit einem nicht brennbaren, transparenten organischen Kleber verbunden.

Die EP 1 088 651 A2 offenbart eine Verbundscheibe bei der zwischen zwei Glasscheiben eine Harzschicht gehalten ist.

Aus der WO 2004/082933 A1 geht eine feuerfeste Verglasung hervor, bei der zwischen zwei Glasscheiben ein Interlayer angeordnet ist. Dieser Interlayer weist eine feuerbeständige Schicht auf.

Die DE 92 11 909 U1 offenbart eine einbruchhemmende Autoglasscheibe, bei der zwischen zwei Glasscheiben eine Kernscheibe, bestehend aus Polycarbonat angeordnet ist.

In der DE 42 44 048 A1 ist eine Verbundscheibe beschrieben, bei der mehrere Borosilikatglasscheiben über Gießharzschichten miteinander verbunden sind.

Die US 2003/157339 A1 offenbart ein Feuerschutzglas, bei dem einseitig auf eine Glasscheibe eine Hitze-Reflektionsbeschichtung aufgebracht ist, die von einer weiteren Beschichtung überdeckt ist. Die weitere Beschichtung soll eine Oxidation der Hitze-Reflektionsschicht verhindern.

Aus der US 2010/104877 A1 geht ein Verbundglas als bekannt hervor, bei dem zwei Glasscheiben über eine Silikonschicht miteinander verbunden sind. Eine der beiden Glasscheiben ist mit einer Polycarbonatscheibe hinterlegt.

Einen ähnlichen Aufbau beschreibt die US 4,243,719 A.

Aus der DE 195 39 214 A1 geht ein brandsicheres Scheibenelement als bekannt hervor, bei dem zwischen zwei Scheiben ein innenliegendes Netz, bestehend aus Kunststofffäden gehalten ist, um im Fall eines Bruches der Scheiben die Bruchstücke im Verbund zu halten.

Aus der DE 34 86 336 T2 ist es bekannt, ein Verbundglas mit einer Ionomerharzbeschichtung zu versehen. Mit dieser Beschichtung soll Energie in Folge einer schlagartigen Einwirkung absorbiert werden.

Die EP 0 389 291 A1 offenbart ein Verbundglas mit zwei Glasscheiben zwischen denen eine Schicht aus Polyvinylbutyral gehalten ist. Auch bei einem solchen Glasaufbau können gemäß der EP 0 389 291 Reflektionsbeschichtungen vorgesehen sein.

In der DE 10 2008 043 718 A1 ist eine Verbundscheibe beschrieben, bei der eine Vielzahl von Glasscheiben über Gießharzschichten miteinander verbunden sind um so eine wuchteinwirkungsfeste Scheibenanordnung zu erhalten.

Es ist Aufgabe der Erfindung, eine Verbundscheibe zu schaffen, die gute Brandschutzeigenschaften und zudem durchbruchhemmende Eigenschaften aufweist und dabei insbesondere im industriellen Prozess einfach fertigbar ist.

Diese Aufgabe wird mit den Merkmalen des Anspruches 1 gelöst. Demgemäß ist es vorgesehen, dass die Verbundscheibe eine Brandschutzverglasung aufweist, zu der parallel beabstandet eine Glas- oder Glaskeramikscheibe angeordnet ist. Zwischen der Brandschutzverglasung und der Glas- oder Glaskeramikscheibe ist mindestens ein Kunststoffinterlayer, bestehend aus Polycarbonat oder Polymethylmethacrylat, angeordnet. Die Brandschutzverglasung sichert zuverlässig den Raumabschluss im Brandfall. Zusätzlich bietet der Kunststoffinterlayer aus Polycarbonat oder Polymethylmethacrylat eine hohe Durchbruchhemmung nach EN 356. Insbesondere können ohne weiteres Durchbruchhemmungen der Klassifizierung P8B dieser Norm und/oder der Klassifizierung nach ISO 16936-P3B verwirklicht werden.

Zusätzlich bieten die Kunststoffinterlayer ein Widerstandsvermögen gegen punktförmige Durchdringungen/Durchschläge mit den Werkzeugsätzen der ENV 1630 und/oder der pr EN 1630.

Der Kunststoffinterlayer ist flächig mit der Brandschutzverglasung und der Glas- oder Glaskeramikscheibe verbunden. Auf diese Weise ergibt sich ein monolithischer Körper, der einheitlich gehandhabt und verbaut werden kann. Zusätzlich bringt die flächenförmige Verbindung zusätzliche Festigkeitseigenschaften.

Der Kunststoffinterlayer ist unter Zwischenlage jeweils einer Haftvermittlerschicht stoffschlüssig mit der Brandschutzverglasung und der Glas- oder Glaskeramischeibe verbunden ist. Als Haftvermittlerschichten ist es denkbar, eine Verklebung vorzusehen. Zur Optimierung der Fertigungsprozesse wird allerdings bevorzugt ein Autoklavverfahren eingesetzt, bei dem die Verbundscheibe unter Druck- und Hitzeeinwirkung geformt wird. Dabei entsteht das Laminat, bei dem der Kunststoffinterlayer und die Brandschutzverglasung miteinander zuverlässig verbunden werden. Insbesondere wird dieses Autoklavverfahren einfach anwendbar, wenn vorgesehen ist, dass die Haftvermittlerschicht aus Polyurethan besteht, insbesondere von einer Polyurethanfolie gebildet ist. Dann wird ein Laminatverbund gebildet, der einheitlich in den Autoklavofen eingeschoben und unter Temperatureinwirkung und Druck zu einem monolithischen Körper verbacken werden kann.

Es hat sich gezeigt, dass eine zuverlässige Verbindung des Kunststoffinterlayers mit den angrenzenden Scheiben dann erreicht werden kann, wenn die Dicke des Kunststoffinterlayers ≥ 2 mm beträgt. Zusätzlich werden mit diesen Materialdicken hohe Durchbruchhemmungen möglich.

Um zu verhindern, dass der Kunststoffinterlayer im Einsatz auf seiner der Brandschutzverglasung abgewandten Seite durch mechanische Beanspruchung beschädigt wird, ist dieser mit der Glas- oder Glaskeramikscheibe abgedeckt. Dabei kann diese Glas- oder Glaskeramikscheibe beispielsweise von einem Floatglas gebildet sein, sodass eine kostengünstige Fertigung möglich ist.

Für eine weitere Erhöhung der Schutzwirkung der Verbundscheibe kann es auch vorgesehen sein, dass ein Verbundsicherheitsglas als Glas- oder Glaskeramischeibe verwendet ist. Dieses Verbundsicherheitsglas besteht in der Regel aus zwei oder mehreren zueinander parallelen Glasscheiben, beispielsweise Kalknatronglasscheiben oder aus Glaskeramikscheiben. Diese Scheiben sind unter Verwendung einer PVB-Folie miteinander verbunden.

Erfindungsgemäß ist es vorgesehen, dass die Brandschutzverglasung mindestens zwei zueinander parallel beabstandete Scheiben, bestehend aus Glas oder Glaskeramik, aufweist, und dass zwischen den Scheiben eine intumeszierende Schicht angeordnet ist. Die intumeszierende Brandschicht besteht beispielsweise aus mit organischen Verbindungen versetzten Alkalisilikaten oder aus Schichten aus Salz gefüllten wässrigen Acrylpolymeren (Hydrogele). Diese Materialien haben die Eigenschaft, im Brandfall an Volumen zu- und an Dichte abzunehmen. Solche Brandschutzverglasungen sichern den Raumabschluss, wobei die Wärmeleitung erheblich eingedämmt wird.

Mit den Brandschutzverglasungen kann ein ausreichender Raumabschluss über lange Befeuerungszeiträume verwirklicht werden. Insbesondere wird dies dann möglich, wenn die Brandschutzverglasung von wenigstens einer Scheibe bestehend aus Borosilikatglas gebildet ist. Um im Brandfall eine ausreichende Brandschutzverglasung und zudem mechanische Stabilität zu erreichen, sollte es im Rahmen der Erfindung vorgesehen sein, dass die Dicke der Brandschutzverglasung im Bereich zwischen 3 mm und 25 mm gewählt ist.

Die Fertigung der Verbundscheibe gelingt insbesondere dann einfach, wenn vorgesehen ist, dass das Verhältnis der Dicke der Brandschutzverglasung $d_B$ zu der Dicke des Kunststoffinterlayers $d_L$ im Bereich zwischen 1 und 4 gewählt ist. Dabei wird eine Fertigung im Autoklavverfahren möglich, bei der keine unzulässig hohen Spannungen in der Verbundscheibe aufgrund von Schrumpfprozessen bedingt durch das unterschiedliche thermische Ausdehnungsverhalten der Brandschutzverglasung und des Kunststoffinterlayers entstehen.

Gemäß einer bevorzugten Ausgestaltungsvariante der Erfindung kann es vorgesehen sein, dass die Schichtdicke der Haftvermittlerschicht im Bereich zwischen 0,3 mm und 1,6 mm gewählt ist. Derartige Schichtdicken können im Autoklaverfahren erzeugt werden, sodass eine wirtschaftliche Fertigung möglich ist.

Insbesondere kann es vorgesehen sein, dass die Schichtdicke der Haftvermittlerschicht im Bereich zwischen 0,3 mm und 0,8 mm gewählt ist. Derartig dünne Schichten lassen sich im Autoklavverfahren insbesondere dadurch erzeugen, dass dünnes Folienmaterial verwendet wird, das die Haftvermittlerschicht bildet. Als Haftvermittlerschicht lässt sich dann insbesondere Polyurethanfolie einsetzen. Diese ist beispielsweise handelsüblich mit einer Schichtdicke von etwa 0,38 mm erhältlich. Wenn Unebenheiten der Glasoberfläche ausgeglichen werden sollen, so empfiehlt es sich, zwei oder mehrere Polyurethanfolien aufeinander zu legen, um dann eine dickere Schichtdicke der Haftvermittlerschicht zu erreichen, die dann diese Unebenheiten ausgleicht.

Die Aufgabe der Erfindung wird auch mit einem Verfahren zur Herstellung einer Verbundscheibe gemäß Anspruch 10 gelöst, wobei unter Zwischenlage mindestens eines Kunststoffinterlayers aus Poylcarbonat oder Polymethylmethacrylat eine Brandschutzverglasung beabstandet zu einer Glas- oder Glaskeramikscheibe angeordnet wird, und wobei die Brandschutzverglasung mit der Glas- oder Glaskeramikscheibe im Autoklavverfahren unter Vermittlung jeweils einer Haftvermittlerschicht verbunden wird. Diese Vorgehensweise ermöglicht es, auf wirtschaftliche Weise durchbruchsichere Brandschutzverglasungen herzustellen. Das Autoklavverfahren gewährleistet dabei eine zuverlässige Verbindungsbildung in kurzer Prozessdauer und mit geringem Fertigungsaufwand.

Besonders bevorzugt ist es, wenn das Autoklavverfahren im Sackverfahren betrieben wird, sodass sich auch große Formatgrößen der Verbundscheibe wirtschaftlich herstellen lassen.

Eine bevorzugte Erfindungsvariante ist derart, dass das Autoklavverfahren bei einer Mindesttemperatur von 80°C betrieben wird. Dann kann die zuverlässige flächige Verbindung der Brandschutzverglasung mit der Glas- oder Glaskeramikscheibe erfolgen. Wenn die Brandschutzverglasung mit einer intumeszierenden Schicht ausgeführt ist, so sollte die Temperatur im Autoklavverfahren ≤ 110°C gewählt werden, um ein Ausreagieren der intumeszierenden Schicht zu verhindern.

Wirtschaftliche Prozesszyklen lassen sich bei Maximaldrücken von ≤ 12 bar im Autoklavverfahren realisieren.

Die Erfindung wird im Folgenden anhand von in den Zeichnungen dargestellten Ausführungsbeispielen näher erläutert. Es zeigen:

Figur 1    eine Verbundscheibe in Teildarstellung und Seitenansicht;

Figur 2    eine Baureihenfolge für die Verbundscheibe gemäß Figur 1 in schematischer Darstellung; und

Figur 3    eine Baureihenfolge für eine Verbundscheibe in schematischer Darstellung.

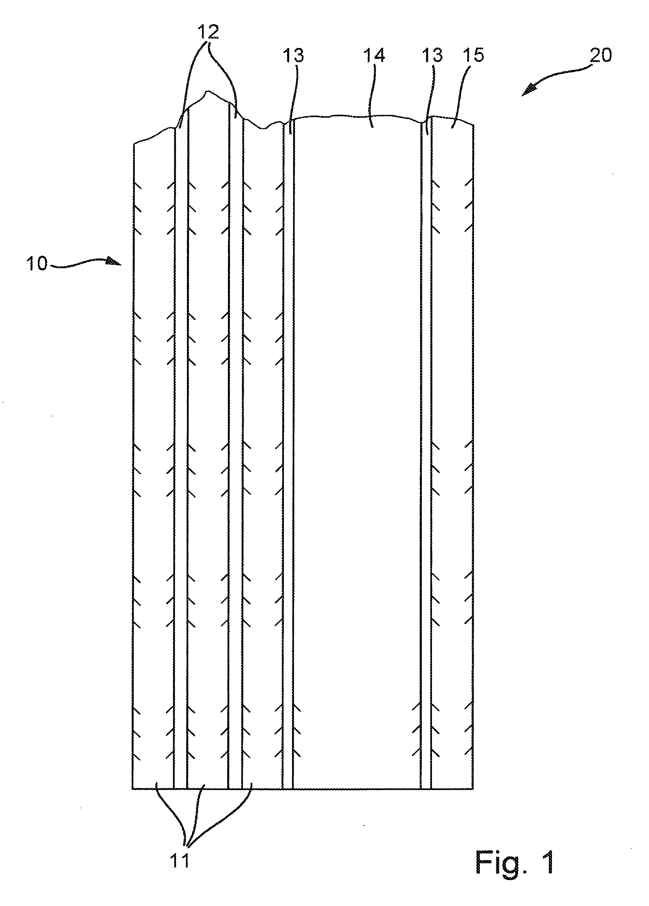

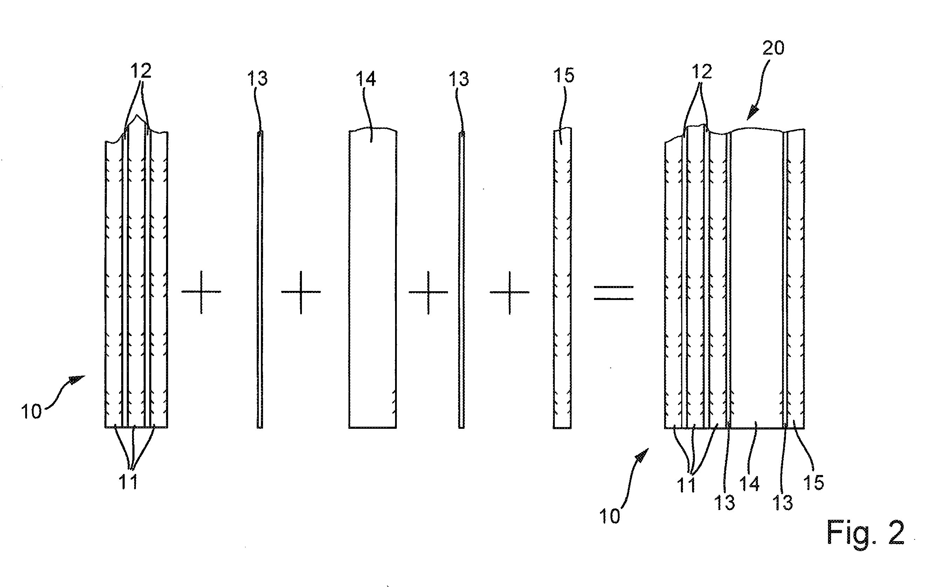

Wie die Figuren 1 und 2 erkennen lassen, besteht die Verbundscheibe 20 aus mehreren Bauteilen. Dabei ist zunächst eine gängige Brandschutzverglasung 10 verwendet. Diese besteht aus mehreren zueinander parallelen Glasscheiben 11, beispielsweise Kalknatronglasscheiben, zwischen denen intumeszierende Schichten 12 angeordnet sind. Beispielsweise können mit organischen Verbindungen versetzte Alkalisilikate oder Schichten mit aus Salz gefüllten wässrigen Acrylpolymeren (Hydrogele) als intumeszierende Schichten 12 verwendet sein.

Auf die in Figur 1 rechte Seitenfläche der Brandschutzverglasung 10 wird planparallel eine PUR-Folie aufgelegt, die als Haftvermittler 13 dient. Der Brandschutzverglasung 10 abgekehrt wird auf den Haftvermittler 13 ein Kunststoffinterlayer 14 aufgelegt. Der Haftvermittler 13 dient dazu, den Kunststoffinterlayer 14 vollflächig und stoffschlüssig mit der Brandschutzverglasung 10 zu verbinden. Der Kunststoffinterlayer 14 wird von einer Kunststofffolie gebildet, die aus Polycarbonat oder Polymethylmethacrylat besteht. Auf den Kunststoffinterlayer 14 wird der Brandschutzverglasung 10 abgekehrten ein weiterer Haftvermittler 13 aufgelegt. Dieser Haftvermittler 13 dient zur Ankopplung einer Glas- oder Glaskeramikscheibe 15. Der Haftvermittler 13 soll wieder für die vollflächige und stoffschlüssige Verbindung zwischen dem Kunststoffinterlayer 14 und der Glas- beziehungsweise Glaskeramikscheibe 15 dienen. Die Haftvermittler 13 werden beispielsweise von einer PUR-Folie gebildet. Der in der vorstehend beschriebenen Weise aufgebaute Scheibenverbund wird im Sackverfahren in einen Autoklavofen eingebracht. Dort wird unter erhöhter Temperatur- und Druckeinwirkung eine Verbindung der einzelnen Scheibenelemente erreicht. Beispielsweise kann die Autoklavtemperatur größer 80°C, insbesondere beispielsweise 90°C, betragen. Der aufgebaute Druck im Autoklavofen sollte größer 1 bar und kleiner 5 bar betragen. Abhängig von den gewählten Temperatur- und Druckwerten kann dann die Verweildauer im Autoklavofen gewählt werden, bis die Glas- bzw. Glaskeramikscheibe 15 und die Brandschutzverglasung 10 unter Aufschmelzung der Haftvermittler 13 miteinander zu einem festen Verbund verbacken sind.

Für die Glas- oder Glaskeramikscheibe 15 kann eine handelsübliche Scheibe aus Kalknatronglas verwendet sein. Denkbar ist es auch, dass eine chemisch oder thermisch vorgespannte Glasscheibe, insbesondere eine Borosilikatglasscheibe Verwendung findet. Weiterhin denkbar ist es, dass ein Verbundsicherheitsglas für die Glas- oder Glaskeramikscheibe 15 verwendet ist. Diese besteht üblicherweise aus zwei oder mehreren zueinander parallelen Glasscheiben, die unter Vermittlung einer PVB-Folie miteinander verbunden sind.

Gemäß einer konkreten Ausführung kann für die Brandschutzverglasung 10 das Brandschutzglas Pyranova 2.0.11 der SCHOTT AG mit einer Dicke von 5 mm, für den Kunststoffinterlayer 14 eine Polycarbonatfolie mit einer Stärke von 4 mm und für die Glasscheibe 11 ein Floatglas mit einer Stärke von 4 mm verwendet werden. Mit einem solchen Aufbau kann ein Feuerwiderstand gemäß EN 1363 von EI 30 erreicht werden. Weiterhin weist eine solche Verbundscheibe 20 einen Widerstand gegen Durchbruch nach EN 356 von P8B auf. Die Verwendung von Polyurethanfolien als Haftvermittler 13 mit einer Stärke von ca. 0,7 mm führt zu einer dauerhaften Verbindung, wobei insbesondere eine Bestrahlungsprüfung nach DIN EN 12543-4 zu keiner Veränderung der Klebeschicht führt.

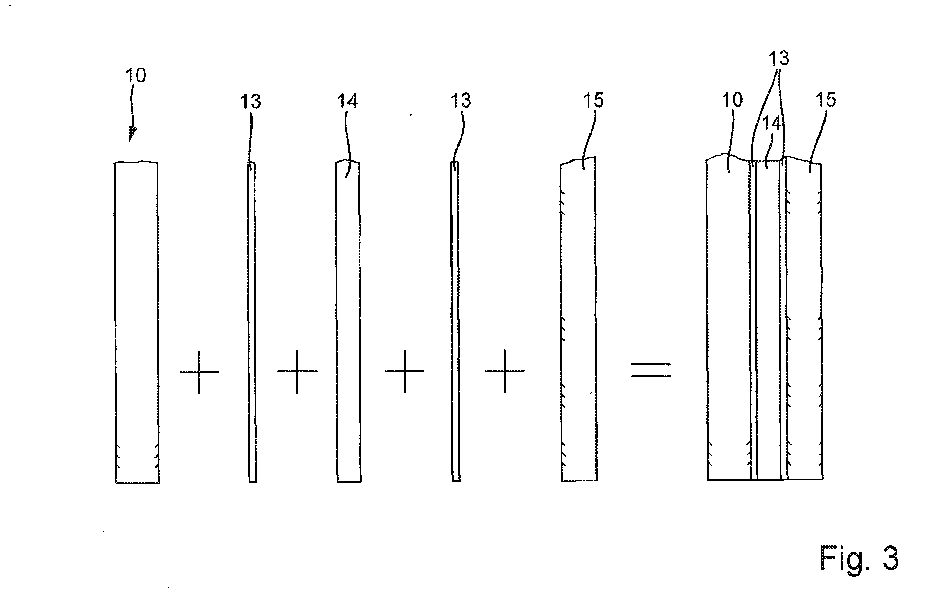

Eine weitere Ausgestaltung einer Verbundscheibe 20 ist in der Figur 3 dargestellt. Wie diese Zeichnung erkennen lässt, wird die Brandschutzverglasung 10 von einer Glasscheibe 11 gebildet, die beispielsweise ein thermisch vorgespanntes Borosilikatglas sein kann. Unter Zwischenlage eines Haftvermittlers 13, bestehend aus Polyurethanfolie, wird der Kunststoffinterlayer 14 auf die Brandschutzverglasung 10 aufgelegt. Der Brandschutzverglasung 10 abgewandt wird ein weiterer Haftvermittler 13, nämlich eine Polyurethanfolie, aufgelegt. Diese Polyurethanfolie wird schließlich von einer Glasscheibe 15, nämlich einer Floatglasscheibe, abgedeckt. Der so gebildete Scheibenverband wird wieder in einen Autoklavofen im Sackverfahren eingebracht. Dort erfolgt eine Temperatur- und Druckbehandlung, beispielsweise bei ca. 100°C und einem Druck von < 10 bar über eine Verweildauer von ca. 8 Stunden. Anschließend sind die Haftvermittler 13 aufgeschmolzen und führen zu einer stoffschlüssigen und vollflächigen Verbindung des Kunststoffinterlayers 14 mit der Brandschutzverglasung 10 und der Glasscheibe 15.

Bei Verwendung eines thermisch vorgespannten Borosilikatglases des Typs Boro 40 (Pyran S) der SCHOTT AG mit einer Stärke von 5 mm als Brandschutzverglasung 10, einer Kunststoffscheibe mit einer Stärke von 4 mm, bestehend aus Polycarbonat, als Kunststoffinterlayer 14 und einer Floatglasscheibe mit einer Stärke von 4 mm als Glasscheibe 15 ergibt sich ein Feuerwiderstand nach EN 1363 der Kategorie E 30. Weiterhin bildet diese Verbundscheibe eine Widerstandsklasse gegen Durchbruch nach EN 356 von P6B.

Bei einer Bestrahlungsprüfung dieser Verbundscheibe nach DIN EN 12543-4 wird die von den Haftvermittlern 13 gebildete Klebeschicht nicht beschädigt.

**Patentansprüche**

1. Verbundscheibe (20) mit einer Brandschutzverglasung (10), zu der beabstandet eine Glas- oder Glaskeramikscheibe (15) angeordnet ist, wobei zwischen der Brandschutzverglasung (10) und der Glas- oder Glaskeramikscheibe (15) mindestens ein Kunststoffinterlayer (14), bestehend aus Polycarbonat oder Polymethylmethacrylat, angeordnet ist, wobei der Kunststoffinterlayer (14) flächig mit der Brandschutzverglasung (10) und der Glas- oder Glaskeramikscheibe (15) verbunden ist, wobei die Brandschutzverglasung (10) mindestens zwei zueinander parallel beabstandete Scheiben (11), bestehend aus Glas oder Glaskeramik, aufweist, wobei zwischen den Scheiben (11) der Brandschutzverglasung (10) eine intumeszierende Schicht (12) angeordnet ist, und wobei der Kunststoffinterlayer (14) unter Zwischenlage jeweils einer Haftvermittlerschicht (13) stoffschlüssig mit der Brandschutzverglasung (10) und der Glas- oder Glaskeramikscheibe (15) verbunden ist.

2. Verbundscheibe (20) nach Anspruch 1,
   **dadurch gekennzeichnet,**
   **dass** die Haftvermittlerschicht (13) aus Polyurethan besteht, insbesondere von einer Polyurethanfolie gebildet ist.

3. Verbundscheibe (20) nach einem der Ansprüche 1 oder 2,
   **dadurch gekennzeichnet,**
   **dass** der Kunststoffinterlayer (14) eine Dicke ≥ 2 mm aufweist.

4. Verbundscheibe (20) nach einem der Ansprüche 1 bis 3,
   **dadurch gekennzeichnet,**
   **dass** die Glas- oder Glaskeramikscheibe (15) von einem Floatglas oder einem Verbundsicherheitsglas gebildet ist.

5. Verbundscheibe (20) nach einem der Ansprüche 1 bis 4,
   **dadurch gekennzeichnet,**
   **dass** die Brandschutzverglasung (10) von wenigstens einer Scheibe, bestehend aus Borosilikatglas, gebildet ist.

6. Verbundscheibe (20) nach einem der Ansprüche 1 bis 5,
   **dadurch gekennzeichnet,**
   **dass** die Brandschutzverglasung (10) eine Dicke von 3 bis 25 mm aufweist.

7. Verbundscheiben (20) nach einem der Ansprüche 1 bis 6,
   **dadurch gekennzeichnet,**
   **dass** das Verhältnis der Dicke der Brandschutzverglasung (10) $d_B$ zu der Dicke des Kunststoffinterlayers (14) $d_L$ beträgt:

   $$d_B/d_L = \tfrac{1}{4}.$$

8. Verbundscheibe (20) nach einem der Ansprüche 1 bis 7,
   **dadurch gekennzeichnet,**
   **dass** die Schichtdicke der Haftvermittlerschicht (13) im Bereich zwischen 0,3 mm und 1,6 mm gewählt ist.

9. Verbundscheibe (20) nach Anspruch 8,
   **dadurch gekennzeichnet,**
   **dass** die Schichtdicke der Haftvermittlerschicht (13) im Bereich zwischen 0,3 mm und 0,8 mm gewählt ist.

10. Verfahren zur Herstellung einer Verbundscheibe (20), wobei unter Zwischenlage mindestens eines Kunststoffinterlayers (14) aus Polycarbonat oder Polymethylmethacrylat eine Brandschutzverglasung (10) mit mindestens zwei zueinander parallel beabstandeten Scheiben (11) bestehend aus Glas oder Glaskeramik und einer zwischen den Scheiben (11) der Brandschutzverglasung (10) angeordneten intumeszierenden Schicht (12) beabstandet zu einer Glas- oder Glaskeramikscheibe (15) angeordnet wird, und
wobei die Brandschutzverglasung (10) mit der Glas- oder Glaskeramikscheibe (15) im Autoklavverfahren unter Vermittlung jeweils einer Haftvermittlerschicht (13) verbunden wird.

11. Verfahren nach Anspruch 10,
**dadurch gekennzeichnet,**
**dass** die Verbindung der Brandschutzverglasung (10) mit der Glas- oder Glaskeramikscheibe (15) im Autoklavverfahren bei einer Mindesttemperatur von 80°C erfolgt.

12. Verfahren nach einem der Ansprüche 10 oder 11,
**dadurch gekennzeichnet,**
**dass** die Verbindung der Brandschutzverglasung (10) mit der Glas- oder Glaskeramikscheibe (15) bei einer Maximaltemperatur von 5 110°C erfolgt.

13. Verfahren nach einem der Ansprüche 10 bis 12,
**dadurch gekennzeichnet,**
**dass** das Autoklavverfahren bei einem Maximaldruck von ≤ 12 bar betrieben wird.

14. Verfahren nach einem der Ansprüche 10 bis 13,
**gekennzeichnet durch** einen der Ansprüche 1 bis 9.

## Claims

1. Composite pane (20) having a fire protection glazing (10) to which a glass or glass-ceramic pane (15) is arranged at a spacing, wherein at least one polymer interlayer (14) consisting of polycarbonate or polymethyl methacrylate is arranged between the fire protection glazing (10) and the glass or glass-ceramic pane (15), the polymer interlayer (14) is joined over an area to the fire protection glazing (10) and the glass or glass-ceramic pane (15), the fire protection glazing (10) has at least two parallel panes (11) which are arranged at a spacing and consist of glass or glass-ceramic, an intumescent layer (12) is arranged between the panes (11) of the fire protection glazing (10) and the polymer interlayer (14) is adhesively joined in each case via an intermediate bonding layer (13) to the fire protection glazing (10) and the glass or glass-ceramic pane (15).

2. Composite pane (20) according to Claim 1, **characterized in that** the bonding layer (13) consists of polyurethane, in particular is formed by a polyurethane film.

3. Composite pane (20) according to either Claim 1 or 2, **characterized in that** the polymer interlayer (14) has a thickness of ≥ 2 mm.

4. Composite pane (20) according to any of Claims 1 to 3, **characterized in that** the glass or glass-ceramic pane (15) is formed by a float glass or a composite safety glass.

5. Composite pane (20) according to any of Claims 1 to 4, **characterized in that** the fire protection glazing (10) is formed by at least one pane consisting of borosilicate glass.

6. Composite pane (20) according to any of Claims 1 to 5, **characterized in that** the fire protection glazing (10) has a thickness of from 3 to 25 mm.

7. Composite pane (20) according to any of Claims 1 to 6, **characterized in that** the ratio of the thickness of the fire protection glazing (10) $d_B$ to the thickness of the polymer interlayer (14) $d_L$ is:

$$d_B/d_L = ¼.$$

8. Composite pane (20) according to any of Claims 1 to 7, **characterized in that** the layer thickness of the bonding layer (13) is selected in the range from 0.3 mm to 1.6 mm.

9. Composite pane (20) according to Claim 8, **characterized in that** the layer thickness of the bonding layer (13) is selected in the range from 0.3 mm to 0.8 mm.

10. Process for producing a composite pane (20) wherein a fire protection glazing (10) having at least two parallel panes (11) which are arranged at a spacing and consist of glass or glass-ceramic and having an intumescent layer (12) arranged between the panes (11) of the fire protection glazing (10) is arranged at a spacing via at least one interposed polymer interlayer (14) composed of polycarbonate or polymethyl methacrylate to a glass or glass-ceramic pane (15), and wherein the fire protection glazing (10) is joined via in each case an intermediate bonding layer (13) to the glass or glass-ceramic pane (15) in an autoclave process.

11. Process according to Claim 10, **characterized in that** the joining of the fire protection glazing (10) to the glass or glass-ceramic pane (15) in the autoclave process is carried out at a minimum temperature of 80°C.

12. Process according to either Claim 10 or 11, **characterized in that** the joining of the fire protection glazing (10) to the glass or glass-ceramic pane (15) is carried out at a maximum temperature of ≤ 110°C.

**13.** Process according to any of Claims 10 to 12, **characterized in that** the autoclave process is operated at a maximum pressure of ≤ 12 bar.

**14.** Process according to any of Claims 10 to 13, **characterized by** any of Claims 1 to 9.

**Revendications**

**1.** Vitre composite (20) avec un vitrage coupe-feu (10), à distance duquel est disposée une vitre de verre ou de vitrocéramique (15), dans laquelle au moins une couche intermédiaire en matière plastique (14), composée de polycarbonate ou de méthacrylate de polyméthyle, est disposée entre le vitrage coupe-feu (10) et la vitre de verre ou de vitrocéramique (15), dans laquelle la couche intermédiaire en matière plastique (14) est assemblée en surface au vitrage coupe-feu (10) et à la vitre de verre ou de vitrocéramique (15), dans laquelle le vitrage coupe-feu (10) présente au moins deux vitres espacées (11) parallèles l'une à l'autre, composées de verre ou de vitrocéramique, dans laquelle une couche intumescente (12) est disposée entre les vitres (11) et le vitrage coupe-feu (10), et dans laquelle la couche intermédiaire en matière plastique (14) est assemblée en continuité de matière au vitrage coupe-feu (10) et à la vitre de verre ou de vitrocéramique (15) respectivement avec interposition d'une couche d'agent adhésif (13).

**2.** Vitre composite (20) selon la revendication 1, **caractérisée en ce que** la couche d'agent adhésif (13) se compose de polyuréthane, en particulier est formée par un film de polyuréthane.

**3.** Vitre composite (20) selon l'une des revendications 1 ou 2, **caractérisée en ce que** la couche intermédiaire en matière plastique (14) présente une épaisseur ≥ 2 mm.

**4.** Vitre composite (20) selon l'une quelconque des revendications 1 à 3, **caractérisée en ce que** la vitre de verre ou de vitrocéramique (15) est formée par un verre flotté ou par un verre de sécurité feuilleté.

**5.** Vitre composite (20) selon l'une quelconque des revendications 1 à 4, **caractérisée en ce que** le vitrage coupe-feu (10) est formé par au moins une vitre, composée de verre au borosilicate.

**6.** Vitre composite (20) selon l'une quelconque des revendications 1 à 5, **caractérisée en ce que** le vitrage coupe-feu (10) présente une épaisseur de 3 à 25 mm.

**7.** Vitre composite (20) selon l'une quelconque des revendications 1 à 6, **caractérisée en ce que** le rapport entre l'épaisseur du vitrage coupe-feu (10) $d_B$ et l'épaisseur de la couche intermédiaire en matière plastique (14) $d_L$ vaut $d_B/d_L$ = ¼.

**8.** Vitre composite (20) selon l'une quelconque des revendications 1 à 7, **caractérisée en ce que** l'épaisseur de couche de la couche d'agent adhésif (13) est choisie dans la plage comprise entre 0,3 mm et 1,6 mm.

**9.** Vitre composite (20) selon la revendication 8, **caractérisée en ce que** l'épaisseur de couche d'agent adhésif (13) est choisie dans la plage comprise entre 0,3 mm et 0,8 mm.

**10.** Procédé de fabrication d'une vitre composite (20), dans lequel on dispose un vitrage coupe-feu (10), constitué d'au moins deux vitres espacées (11) parallèles l'une à l'autre, composées de verre ou de vitrocéramique, et d'une couche intumescente (12) disposée entre les vitres (11) du vitrage coupe-feu (10), à distance d'une vitre de verre ou de vitrocéramique (15) avec interposition d'au moins une couche intermédiaire en matière plastique (14) composée de polycarbonate ou de méthacrylate de polyméthyle, et dans lequel on assemble le vitrage coupe-feu (10) à la vitre de verre ou de vitrocéramique (15) par un procédé en autoclave avec dépôt d'une couche d'agent adhésif (13).

**11.** Procédé selon la revendication 10, **caractérisé en ce que** l'on effectue l'assemblage du vitrage coupe-feu (10) à la vitre de verre ou de vitrocéramique (15) par un procédé en autoclave à une température minimale de 80°C.

**12.** Procédé selon l'une des revendications 10 ou 11, **caractérisé en ce que** l'on effectue l'assemblage du vitrage coupe-feu (10) à la vitre de verre ou de vitrocéramique (15) à une température maximale de ≤ 110°C.

**13.** Procédé selon l'une quelconque des revendications 10 à 12, **caractérisé en ce que** l'on exécute le procédé en autoclave à une pression maximale de ≤ 12 bar.

**14.** Procédé selon l'une quelconque des revendications 10 à 13, **caractérisé par** une des revendications 1 à 9.

Fig. 1

Fig. 2

EP 2 439 065 B1

Fig. 3

# EP 2 439 065 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008068744 A1
- US 20090246426 A1
- WO 2011120680 A1
- EP 2090427 A1
- EP 1088651 A2
- WO 2004082933 A1
- DE 9211909 U1
- DE 4244048 A1
- US 2003157339 A1
- US 2010104877 A1
- US 4243719 A
- DE 19539214 A1
- DE 3486336 T2
- EP 0389291 A1
- EP 0389291 A
- DE 102008043718 A1